(19) Europäisches Patentamt
European Patent Office
Office européen des brevets

(11) **EP 1 865 040 A1**

(12) **EUROPEAN PATENT APPLICATION**
published in accordance with Art. 158(3) EPC

(43) Date of publication:
**12.12.2007 Bulletin 2007/50**

(51) Int Cl.:
**C09J 7/02** (2006.01)     **C09J 107/00** (2006.01)
**C09J 133/00** (2006.01)     **C09J 201/00** (2006.01)

(21) Application number: **06731101.9**

(22) Date of filing: **28.03.2006**

(86) International application number:
**PCT/JP2006/307153**

(87) International publication number:
**WO 2006/107054 (12.10.2006 Gazette 2006/41)**

(84) Designated Contracting States:
**BE DE NL**

(30) Priority: **31.03.2005 JP 2005100991**

(71) Applicant: **Sliontec Corporation**
**Kawasaki-shi, Kanagawa 214-0014 (JP)**

(72) Inventors:
• **IMAI, Eriko,**
**Sliontec Corporation**
**Kawasaki-shi, Kanagawa 2140014 (JP)**

• **TAKEDA, Nobuyoshi,**
**Sliontec Corporation**
**Kawasaki-shi, Kanagawa 2140014 (JP)**

(74) Representative: **Calderbank, Thomas Roger**
**MEWBURN ELLIS**
**York House**
**23 Kingsway**
**London WC2B 6HP (GB)**

(54) **FABRIC PRESSURE-SENSITIVE ADHESIVE TAPE**

(57)     The present invention relates to a pressure sensitive adhesive cloth tape for masking, packaging, mending and such and, more particularly, to a thin, flexible pressure sensitive adhesive cloth tape capable of being easily torn off by hand and of sticking to irregular parts and stepped parts. The present invention provides a pressure sensitive adhesive cloth tape including a backing at least one of the surfaces of which is coated with a pressure sensitive adhesive layer. The backing is a tape of a woven fabric of polyester filament yarns, and each of both the surfaces of the backing is coated with a polyethylene resin layer having a basis weight between 15 and 30 g/m². The polyester filament yarns used as warps have a fineness between 40 and 70 decitex and the polyester filament yarns used as wefts have a fineness between 100 and 170 decitex. The woven fabric is a plainweave fabric, the polyester filament yarns used as warps of the woven fabric are arranged in an end spacing between 45 and 90 yarns/25.4 mm, and the polyester filament yarns used as wefts of the woven fabric are arranged in a pick spacing between 20 and 50 yarns/25.4 mm.

EP 1 865 040 A1

## Description

TECHNICAL FIELD

The present invention relates to a pressure sensitive adhesive cloth tape for masking, packaging, mending and such and, more particularly, to a thin, flexible pressure sensitive adhesive cloth tape capable of being easily torn off by hand and of sticking to irregular parts and stepped parts.

BACKGROUND ART

A conventional backing for a hand-tearable pressure sensitive adhesive cloth tape is made by coating one of or both the surfaces of a plain-weave fabric formed by weaving rayon spun yarns, polyester spun yarns, rayon/polyester blended yarns, polyester filament yarns or polyethylene flat yarns, or a knitted fabric formed by inserting flat yarns as wefts into a warp knitted fabric of multifilament yarns with a resin layer. A pressure sensitive adhesive cloth tape having such a backing having one surface coated with a resin layer tends to curl. When a surface or surfaces of a backing of a pressure sensitive adhesive cloth tape for packaging are coated with a natural rubber pressure sensitive adhesive layer by calendaring, the natural rubber pressure sensitive adhesive layer has a big thickness and is capable of restraining the pressure sensitive adhesive cloth tape from curling. When a surface or surfaces of a backing of a pressure sensitive adhesive cloth tape are coated with a solvent type natural rubber pressure sensitive adhesive layer or an acrylic pressure sensitive adhesive, the pressure sensitive adhesive layer of the solvent type natural rubber pressure sensitive adhesive or the acrylic resin has a comparatively small thickness and is incapable of restraining the pressure sensitive adhesive cloth tape from curling. Some of pressure sensitive adhesive cloth tapes having a backing having one surface coated with a resin layer are unsatisfactory in hand-tearing property. Therefore, a backing having both the surfaces thereof coated with a resin layer needs to be used when the surface or surfaces of a backing is to be coated with a comparatively thin pressure sensitive adhesive layer of an acrylic pressure sensitive adhesive or a solvent type natural rubber pressure sensitive adhesive.

Known backings each having both the surfaces thereof coated with a resin layer for forming a pressure sensitive adhesive tape disclosed in JP H 1-041189 B and JP H 6-192631 A are tapes of plain-weave fabrics formed by weaving polyethylene flat yarns. Known backings disclosed in JP 2000-314062 A and JP 2002-294189 A are tapes of knitted fabrics formed by inserting flat yarns as wefts into warp knitted fabrics of multiflament yarns.

When the foundation fabrics mentioned in JP H 1-041189 B, JP H 6-192631 A, JP 2000-314062 A and JP 2002-294189 A are used, at least one of the surfaces of each of those foundation fabrics needs to be coated with a resin layer having a basis weight not smaller than 30 g/m² to ensure the satisfactory adhesion of the resin layer to the foundation fabric and to provide the foundation fabric with proper hand-tearing property. Consequently, the backing of the pressure sensitive adhesive tape is thick, stiff and not satisfactorily flexible. The foundation fabric of polyethylene flat yarns is thick and it is difficult to form a flexible pressure sensitive adhesive cloth tape by using this foundation fabric.

It is a generally known practice to use pressure sensitive adhesive tapes for fixing masking members with a pressure sensitive adhesive tape for masking outdoors or indoors at building construction sites and housemoving sites. When a pressure sensitive adhesive tape unsatisfactory in flexibility and having a firm backing is stuck to corners, curved surfaces and irregular parts or is stuck in a curve to an object, the pressure sensitive adhesive tape lifts and peels off and is incapable of securing objects. If a pressure sensitive adhesive tape is provided with high adhesive strength to enhance the fixing force, it is highly possible that the adhesive of the pressure sensitive adhesive tape remains on an object when the pressure sensitive adhesive tape stuck to the object is peeled off. Firm pressure sensitive adhesive tapes used for packaging, waterproof and sealing are liable to lift and peel off.

Accordingly, it is an object of the present invention to provide a thin, flexible pressure sensitive adhesive cloth tape excellent in hand-tearing property and capable of effectively sticking to irregular parts and stepped parts.

DISCLOSURE OF THE INVENTION

The present invention provides a pressure sensitive adhesive cloth tape including a backing at least one of the surfaces of which is coated with a pressure sensitive adhesive layer; wherein the backing is a tape of a woven fabric of polyester filament yarns, and each of both the surfaces of the backing is coated with a polyethylene resin layer having a basis weight between 15 and 30 g/m². The pressure sensitive adhesive cloth tape is excellent in hand-tearing property, flexibility and adhesive property.

In the pressure sensitive adhesive cloth tape according to the present invention, both the surfaces of the backing of the woven fabric of polyester filament yarns may be coated with polyethylene resin layers having a total basis weight between 30 and 50 g/m². The pressure sensitive adhesive cloth tape is excellent in hand-tearing property, flexibility, and adhesive property.

In the pressure sensitive adhesive cloth tape according to the present invention, the polyester filament yarns used as warps may have a fineness between 40 and 70 decitex and the polyester filament yarns used as wefts may have a fineness between 100 and 170 decitex. The pressure sensitive adhesive cloth tape is excellent in hand-tearing property.

In the pressure sensitive adhesive cloth tape according to the present invention, the woven fabric may be a plain-weave fabric, the polyester filament yarns used as warps of the woven fabric may be arranged in an end spacing between 45 and 90 yarns/25.4 mm, and the polyester filament yarns used as wefts of the woven fabric may be arranged in a pick spacing between 20 and 50 yarns/25.4 mm. The pressure sensitive adhesive cloth tape is excellent in hand-tearing property.

In the pressure sensitive adhesive cloth tape according to the present invention, the backing may have a thickness between 60 and 100 $\mu$m. The pressure sensitive adhesive cloth tape is excellent in flexibility.

In the pressure sensitive adhesive cloth tape according to the present invention, the pressure sensitive adhesive layer may be formed of an acrylic pressure sensitive adhesive, a hot-melt pressure sensitive adhesive or a solvent type natural rubber pressure sensitive adhesive. The pressure sensitive adhesive cloth tape has an excellent adhesive property.

When the pressure sensitive adhesive cloth tape according to the present invention having the flexible backing is stuck to corners, curved surfaces and irregular parts or is stuck in a curve to an object, the pressure sensitive adhesive cloth tape will not be caused to lift by its firmness and can exercise its high fixing force. When the pressure sensitive adhesive cloth tape according to the present invention is used for masking, the pressure sensitive adhesive cloth tape can exercise its high fixing force even if the pressure sensitive adhesive cloth tape has a low bond strength and the adhesive of the pressure sensitive adhesive cloth tape will scarcely remain on an object after the pressure sensitive adhesive cloth tape stuck to the object is peeled off.

BEST MODE FOR CARRYING OUT THE INVENTION

The inventors of the present invention found that a thin, flexible pressure sensitive adhesive cloth tape excellent in hand-tearing property and capable of effectively sticking to irregular parts and stepped parts can be obtained by using a backing obtained by coating the opposite surfaces of a woven fabric of polyester filament yarns coated with a resin layer having a basis weight between 15 and 30 g/m$^2$.

A thin resin layer can be formed on a woven fabric including polyester filament yarns used as warps and polyester filament yarns used as wefts. Therefore, such a woven fabric is an optimum fabric for forming a flexible pressure sensitive adhesive cloth tape. Normally, the greater the thickness of the resin layer, the higher the bond strength bonding together the woven fabric and the resin layer. Bond strength bonding together a woven fabric of polyester filament yarns and a resin layer is higher than that bonding together a woven fabric of other material and a resin layer. Even a resin layer having a basis weight of 15 g/m$^2$ can be bonded to the woven fabric by a sufficiently high bonding strength and, consequently, the most flexible backing can be obtained.

Preferably, each of both the surfaces of a woven fabric of polyester filament yarns is coated with a resin layer having a basis weight between 15 and 30 g/m$^2$. More desirably, both the surfaces are coated with polyethylene resin layers, respectively, and the total basis weight of the two polyethylene resin layers is between 30 and 50 g/m$^2$.

The flexibility of a pressure sensitive adhesive cloth tape is between 1 and 4 N when both the surfaces of the backing thereof are coated with resin layers each having a basis weight between 15 and 30 g/m$^2$. A pressure sensitive adhesive cloth tape is excellent particularly in flexibility and the flexibility of the pressure sensitive adhesive cloth tape is between 1 and 3 N when both the surfaces of the backing are coated with the resin layers and the total basis weight of the two resin layers is between 30 and 50 g/m$^2$.

Increase in the thickness of the resin layer improves the adhesion between the woven fabric and the resin layer and the hand-tearing property of the adhesive cloth tape, but reduces flexibility. Decrease in the thickness of the resin layer reduces the adhesion between the woven cloth and the resin layer and deteriorates the hand-tearing property of the pressure sensitive adhesive cloth tape. The flexibility of the pressure sensitive adhesive cloth tape starts to deteriorate as a basis weight of the resin layer on each surface increases beyond 30 g/m$^2$ or the total basis weight of the resin layers formed on both the surfaces increases beyond 50 g/m$^2$. When the basis weight of the resin layer coating each surface of the woven fabric is below 15 g/m$^2$, the hand-tearing property of the pressure sensitive adhesive cloth tape is unsatisfactory and the adhesion between the woven fabric and the resin layer is low. Thus it is preferable that the basis weigh to each of the resin layers coating the surfaces of the woven fabric is 15 g/m$^2$ or above.

It is necessary that the basis weight of each of the resin layers coating the surfaces of the woven fabric is 30 g/m$^2$ or below. If the basis weight of one of the two resin layers is above 30 g/m$^2$ and the basis weight of the other resin layer is decreased, the pressure sensitive adhesive cloth tape, similarly to a pressure sensitive adhesive cloth tape having only one surface coated with a resin layer, curls. Therefore, the basis of the resin layer coating the other surface needs necessarily to be above or nearly equal to 30 g/m$^2$. Consequently, the amount of the resin layer coating the surfaces of the woven fabric increases excessively, and the pressure sensitive adhesive cloth tape lacks flexibility. If the pressure sensitive adhesive cloth tape is applied to uses in which curling is not a problem or if curling can be prevented by some other method, one of the surfaces of the woven fabric may be coated with a resin layer having a basis weight above 30 g/m$^2$ and the other surface may be coated with a resin layer having the least necessary basis weight, or only one of the surfaces may be coated with a resin layer to obtain a flexible pressure sensitive adhesive cloth tape.

Rayon spun yarns, polyester spun yarns or rayon/polyester blended yarns may be used instead of the polyester filament yarns. When the fabric of the yarns other than the polyester filament yarns is used, adhesion between the woven fabric and the resin layer is sufficient when the resin layer has a basis weight between 25 and 30 g/m$^2$ and the pressure sensitive adhesive cloth tape is satisfactorily flexible.

Suitable resins for forming the resin layers are olefin resins including polyethylene resins and polypropylene resins.

Preferably, the fineness of the polyester filament yarns used as warps is between 40 and 70 decitex and that of the polyester filament yarns used as wefts is between 100 and 170 decitex. The hand-tearing property of the pressure sensitive adhesive cloth tape is unsatisfactory when the fineness of the warps is above 70 decitex. The flexibility deteriorates when the fineness of the wefts increases beyond 170 decitex. The tensile strength of the pressure sensitive adhesive cloth tape is excessively low when the fineness of the warps is below 40 decitex and the fineness of the wefts is below 100 decitex.

The woven fabric is a plain-weave fabric of polyester filament yarns. Preferably, the polyester filament yarns used as warps of the woven fabric may be arranged in an end spacing between 45 and 90 yarns/25.4 mm, and the polyester filament yarns used as wefts of the woven fabric are arranged in a pick spacing between 20 and 50 yarns/25.4 mm. The flexibility of the pressure sensitive adhesive cloth tape deteriorates with the increase of the end spacing of the warps beyond 90 yarns/25. 4 mm. The flexibility of the pressure sensitive adhesive cloth tape deteriorates also with the increase of the pick spacing of the wefts beyond 50 yarns/25.4 mm. The tensile strength of the pressure sensitive adhesive cloth tape is insufficient when the end spacing of the warps is below 45 yarns/25.4 mm or when the pick spacing of the wefts is below 20 yarns/25.4 mm.

Preferably, the backing of the pressure sensitive adhesive cloth tape has a thickness between 60 and 100 μm. The flexibility of the pressure sensitive adhesive cloth tape is unsatisfactory when the thickness of the backing is above 100 μm. The tensile strength of the pressure sensitive adhesive cloth tape is insufficient when the thickness of the backing is below 60 μm.

Preferably, an adhesive coating the backing of the pressure sensitive adhesive cloth tape is an acrylic pressure sensitive adhesive, a hot-melt pressure sensitive adhesive or a solvent type natural rubber pressure sensitive adhesive. The pressure sensitive adhesive is not limited to those mentioned above.

Although the present invention is described as applied to a single-coated pressure sensitive adhesive cloth tape having one surface coated with the pressure sensitive adhesive, the present invention is applicable also to double-coated pressure sensitive adhesive cloth tapes.

Examples

Example 1

A plain-weave fabric was woven by using 44 decitex polyester filament yarns as warps and 110 decitex polyester filament yarns as wefts. The plane-weave fabric had an end spacing of 68 yarns/25.4 mm and a pick spacing of 34 yarns/25.4 mm. One of the surfaces of the foundation fabric was coated with a polyethylene resin layer having a basis weight of 20 g/m$^2$ and the other surface of the same was coated with a polyethylene resin layer having a basis weight of 25 g/m$^2$ to obtain a backing of 75 μm in thickness. One of the surfaces of the backing was treated by a corona discharge treatment and was coated with a removable acrylic pressure sensitive adhesive layer of 40 μm in thickness to obtain an adhesive tape of 115 μm in thickness. The pressure sensitive adhesive tape was 1.3 N in tear strength (hand-tearability) and 2.5 N in flexibility. The pressure sensitive adhesive tape was used for fixing a masking sheet on an irregular part. The pressure sensitive adhesive tape did not lift and did not peel off in a week.

Example 2

A plain-weave fabric was woven by using 67 decitex polyester filament yarns as warps and 110 decitex polyester filament yarns as wefts. The plane-weave fabric had an end spacing of 48 yarns/25.4 mm and a pick spacing of 30 yarns/25.4 mm. One of the surfaces of the foundation fabric was coated with a polyethylene resin layer having a basis weight of 15 g/m$^2$ and the other surface of the same was coated with a polyethylene resin layer having a basis weight of 15 g/m$^2$ to obtain a backing of 70 μm in thickness. One of the surfaces of the backing was treated by a corona discharge treatment and was coated with a removable acrylic pressure sensitive adhesive layer of 35 μm in thickness to obtain a pressure sensitive adhesive tape of 105 μm in thickness. The adhesive tape was 3.4 N in tear strength and 2.0 N in flexibility. The pressure sensitive adhesive tape was used for fixing a masking sheet on an irregular part. The pressure sensitive adhesive tape did not lift and did not peel off in a week.

Example 3

A plain-weave fabric was woven by using 40 decitex polyester filament yarns as warps and 100 decitex polyester filament yarns as wefts. The plane-weave fabric had an end spacing of 45 yarns/25.4 mm and a pick spacing of 20 yarns/25.4 mm. One of the surfaces of the foundation fabric was coated with a polyethylene resin layer having a basis weight of 15 g/m$^2$ and the other surface of the same was coated with a polyethylene resin layer having a basis weight of 15 g/m$^2$ to obtain a backing of 60 μm in thickness. One of the surfaces of the backing was treated by a corona discharge treatment and was coated with a removable acrylic pressure sensitive adhesive layer of 35 $\mu$m in thickness to obtain a pressure sensitive adhesive tape of 95 $\mu$m in thickness. The pressure sensitive adhesive tape was 1.7 N in tear strength and 1.9 N in flexibility. The pressure sensitive adhesive tape was used for fixing a masking sheet on an irregular part. The pressure sensitive adhesive tape did not lift and did not peel off in a week.

Example 4

A plain-weave fabric was woven by using 70 decitex polyester filament yarns as warps and 170 decitex polyester filament yarns as wefts. The plane-weave fabric had an end spacing of 90 yarns/25.4 mm and a pick spacing of 50 yarns/25.4 mm. One of the surfaces of the foundation fabric was coated with a polyethylene resin layer having a basis weight of 25 g/m$^2$ and the other surface of the same was coated with a polyethylene resin layer having a basis weight of 25 g/m$^2$ to obtain a backing of 100 $\mu$m in thickness. One of the surfaces of the backing was treated by a corona discharge treatment and was coated with a removable acrylic pressure sensitive adhesive layer of 20 $\mu$m in thickness to obtain a pressure sensitive adhesive tape of 120 $\mu$m in thickness. The pressure sensitive adhesive tape was 3.9 N in tear strength and 3.0 N in flexibility. The pressure sensitive adhesive tape was used for fixing a masking sheet on an irregular part. The pressure sensitive adhesive tape did not lift and did not peel off in a week.

Example 5

A plain-weave fabric was woven by using 44 decitex polyester filament yarns as warps and 110 decitex polyester filament yarns as wefts. The plane-weave fabric had an end spacing of 68 yarns/25.4 mm and a pick spacing of 34 yarns/25.4 mm. One of the surfaces of the foundation fabric was coated with a polyethylene resin layer having a basis weight of 20 g/m$^2$ and the other surface of the same was coated with a polyethylene resin layer having a basis weight of 25 g/m$^2$ to obtain a backing of 75 $\mu$m in thickness. One of the surfaces of the backing was treated by a corona discharge treatment and was coated with a removable solvent type natural rubber pressure sensitive adhesive layer of 50 $\mu$m in thickness to obtain a pressure sensitive adhesive tape of 125 $\mu$m in thickness. The pressure sensitive adhesive tape was 1.9 N in tear strength and 2.9 N in flexibility. The pressure sensitive adhesive tape was used for fixing a masking sheet on an irregular part. The pressure sensitive adhesive tape did not lift and did not peel off in a week.

Example 6

A plain-weave fabric was woven by using 67 decitex polyester filament yarns as warps and 110 decitex polyester filament yarns as wefts. The plane-weave fabric had an end spacing of 48 yarns/25.4 mm and a pick spacing of 30 yarns/25.4 mm. One of the surfaces of the foundation fabric was coated with a polyethylene resin layer having a basis weight of 30 g/m$^2$ and the other surface of the same was coated with a polyethylene resin layer having a basis weight of 30 g/m$^2$ to obtain a backing of 100 $\mu$m in thickness. One of the surfaces of the backing was treated by a corona discharge treatment and was coated with a removable acrylic pressure sensitive adhesive layer of 40 $\mu$m in thickness to obtain a pressure sensitive adhesive tape of 140 $\mu$m in thickness. The pressure sensitive adhesive tape was 2.2 N in tear strength (hand-tearability) and 3.9 N in flexibility. The pressure sensitive adhesive tape was used for fixing a masking sheet on an irregular part. The pressure sensitive adhesive tape did not lift and did not peel off in a week.

Example 7

A plain-weave fabric was woven by using 44 decitex polyester filament yarns as warps and 110 decitex polyester filament yarns as wefts. The plane-weave fabric had an end spacing of 68 yarns/25.4 mm and a pick spacing of 34 yarns/25.4 mm. One of the surfaces of the foundation fabric was coated with a polyethylene resin layer having a basis weight of 25 g/m$^2$ and the other surface of the same was coated with a polyethylene resin layer having a basis weight of 25 g/m$^2$ to obtain a backing of 80 $\mu$m in thickness. One of the surfaces of the backing was treated by a corona discharge treatment and was coated with a hot-melt pressure sensitive adhesive layer of 50 $\mu$m in thickness to obtain a pressure sensitive adhesive tape of 130 $\mu$m in thickness. The pressure sensitive adhesive tape was 1.1 N in tear strength (hand-tearability) and 2.7 N in flexibility. The pressure sensitive adhesive tape was used for fixing a masking sheet on an irregular part. The pressure sensitive adhesive tape did not lift and did not peel off in a week.

Comparative example 1

A plain-weave fabric was woven by using 150 decitex rayon spun yarns as warps and 17 decitex polyester filament yarns as wefts. The plane-weave fabric had an end spacing of 44 yarns/25.4 mm and a pick spacing of 20 yarns/25.4 mm. One of the surfaces of the foundation fabric was coated with a polyethylene resin layer having a basis weight of 35 g/m$^2$ and the other surface of the same was coated with a polyethylene resin layer having a basis weight of 35 g/m$^2$ to obtain a backing of 130 $\mu$m in thickness. One of the surfaces of the backing was treated by a corona discharge treatment and was coated with a removable acrylic pressure sensitive adhesive layer of 40 $\mu$m in thickness to obtain a pressure sensitive adhesive tape of 170 $\mu$m in thickness. Although the pressure sensitive adhesive tape was hand-tearable, the same was 6.0 N in flexibility, hard and firm. The pressure sensitive adhesive tape was used for fixing a masking sheet on an irregular part. The pressure sensitive adhesive tape peeled off in a week.

Comparative example 2

A plain-weave fabric was woven by using 100 decitex polyethylene flat yarns as warps and 350 decitex polyethylene flat yarns as wefts. The plane-weave fabric had an end spacing of 46 yarns/25.4 mm and a pick spacing of 17 yarns/25. 4 mm. One of the surfaces of the foundation fabric was coated with a polyethylene resin layer having a basis weight of 35 g/m$^2$ and the other surface of the same was coated with a polyethylene resin layer having a basis weight of 30 g/m$^2$ to obtain a backing of 115 $\mu$m in thickness. One of the surfaces of the backing was treated by a corona discharge treatment and was coated with a removable acrylic pressure sensitive adhesive layer of 40 $\mu$m in thickness to obtain a pressure sensitive adhesive tape of 155 $\mu$m in thickness. Although the pressure sensitive adhesive tape was hand-tearable, the same was 6.2 N in flexibility, hard and firm. The pressure sensitive adhesive tape was used for fixing a masking sheet on an irregular part. The pressure sensitive adhesive tape peeled off in a week.

Tear strength (hand-tearability) and flexibility were evaluated by the following evaluation methods.

Hand-tearing property Evaluation Method

The tear strength of a pressure sensitive adhesive cloth tape was measured by a tear strength measuring method specified in Z0237, JIS. Tear strength was used as a measure hand-tearing property. A prescribed number of test samples of 76 mm in length and 63$\pm$0.2 mm in width were cut out of a pressure sensitive adhesive cloth tape. The tear strength of the test samples was measured by a tear strength tester specified in P8116, JIS. The tear strength of each test sample was calculated by using the following expression:

$$T = (A/S) \times 16$$

where T is tear strength (N), A is a read value on a scale (N) and S is the number of the tested test samples.

Flexibility Evaluation Method

A test sample of 50 mm $\times$ 50 mm was cut out from a pressure sensitive adhesive cloth tape. The test sample was rolled with a lap of 5 mm to form a test tube. The test tube was stood, a flat plate is put on the test tube and the test tube was loaded at a loading speed of 300 mm/min. A load on the test tube at the moment the test tube crushed was measured. Values of flexibility respectively with respect to directions along the length and the width of the pressure sensitive adhesive cloth tape were measured. The flexibility of the pressure sensitive adhesive cloth tape was represented by the mean of those measured values.

INDUSTRIAL APPLICABILITY

As apparent from the foregoing description, the pressure sensitive adhesive cloth tape according to the present invention includes the backing at least one of the surfaces of which is coated with the pressure sensitive adhesive layer, the backing is a tape of a woven fabric of polyester filament yarns having opposite surfaces each coated with the polyethylene resin layer of a basis weight between 15 and 30 g/m$^2$. Preferably, both the surfaces of the backing are coated with polyethylene resin layers having a total basis weight between 30 and 50 g/m$^2$. The thin, flexible pressure sensitive adhesive cloth tape of the present invention is excellent in hand-tearing property and capable of effectively sticking to irregular parts and stepped parts.

**Claims**

1. A pressure sensitive adhesive cloth tape comprising a backing at least one of the surfaces of which is coated with a pressure sensitive adhesive layer; wherein the backing is a tape of a woven fabric of polyester filament yarns, and each of both the surfaces of the backing is coated with a polyethylene resin layer having a basis weight between 15 and 30 g/m$^2$.

2. The pressure sensitive adhesive cloth tape according to claim 1, wherein both the surfaces of the backing of the woven fabric of polyester filament yarns are coated with polyethylene resin layers having a total basis weight between 30 and 50 g/m$^2$.

3. The pressure sensitive adhesive cloth tape according to claim 1 or 2, wherein the polyester filament yarns used as warps have a fineness between 40 and 70 decitex and the polyester filament yarns used as wefts have a fineness between 100 and 170 decitex.

4. The pressure sensitive adhesive cloth tape according to any one of claims 1 to 3, wherein the woven fabric is a plain-weave fabric, the polyester filament yarns used as warps of the woven fabric are arranged in an end spacing between 45 and 90 yarns/ 25.4 mm, and the polyester filament yarns used as wefts of the woven fabric are arranged in a pick spacing between 20 and 50 yarns/25.4 mm.

5. The pressure sensitive adhesive cloth tape according to any one of claims 1 to 4, wherein the backing has a thickness between 60 and 100 μm.

6. The pressure sensitive adhesive cloth tape according to any one of claims 1 to 5, wherein the pressure sensitive adhesive layer is formed of an acrylic pressure sensitive adhesive, a hot-melt pressure sensitive adhesive or a solvent type natural rubber pressure sensitive adhesive.

## INTERNATIONAL SEARCH REPORT

| | International application No. |
|---|---|
| | PCT/JP2006/307153 |

**A. CLASSIFICATION OF SUBJECT MATTER**
*C09J7/02*(2006.01), *C09J107/00*(2006.01), *C09J133/00*(2006.01), *C09J201/00* (2006.01)

According to International Patent Classification (IPC) or to both national classification and IPC

**B. FIELDS SEARCHED**

Minimum documentation searched (classification system followed by classification symbols)
C09J7/02, C09J107/00, C09J133/00, C09J201/00

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 5-117602 A (Nitto Denko Corp.), 14 May, 1993 (14.05.93), Claims 1 to 3; Par. No. [0012]; examples 1 to 2 (Family: none) | 1-6 |
| Y | JP 63-142087 A (Nitto Electric Industrial Co., Ltd.), 14 June, 1988 (14.06.88), Page 2, lower right column, line 13 to page 3, upper left column, line 6; example 1 (Family: none) | 1-6 |
| A | JP 2003-253543 A (Teijin Ltd.), 10 September, 2003 (10.09.03), Claims 1 to 5 (Family: none) | 1-6 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 June, 2006 (21.06.06) | 27 June, 2006 (27.06.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/307153 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 62-283182 A (Nitto Electric Industrial Co., Ltd.), 09 December, 1987 (09.12.87), Claims 1 to 5 (Family: none) | 1-6 |

Form PCT/ISA/210 (continuation of second sheet) (April 2005)

**EP 1 865 040 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1041189 B
- JP H6192631 A
- JP 2000314062 A
- JP 2002294189 A